# EUROPEAN PATENT APPLICATION

(11) **EP 4 553 096 A1**
(43) Date of publication of application: **14.05.2025**
(21) Application number: 23209024.1
(22) Date of filing: 10.11.2023
(51) Int. Cl.: C08G 18/24, C08G 18/28, C08G 18/32, C08G 18/48, C08G 18/67, C08G 18/69, C08G 18/72, C08G 18/75, C08G 18/79, C09J 175/04, C08K 3/22

(54) **POLYOL COMPONENT FOR THERMALLY CONDUCTIVE POLYURETHANE ADHESIVE COMPOSITION**

(71) Applicant: Henkel AG & Co. KGaA, 40589 Düsseldorf (DE)
(72) Inventor: Kohlstrung, Rainer, 68723 Plankstadt (DE); Kreiner, Kersten, 69207 Sandhausen (DE); Stotz, Andreas, 69226 Nußloch (DE)

(57) **Abstract**

The present invention relates to a polyol component for thermally conductive polyurethane adhesive composition, in particular, a polyol component having high filler content as well as low viscosity, to the thermally conductive polyurethane adhesive composition for battery in electric vehicle comprising the polyol component, and to a method of manufacturing the thermally conductive polyurethane adhesive composition.

## Description

The present invention relates to a polyol component for thermally conductive polyurethane adhesive composition, in particular, a polyol component having high filler content as well as low viscosity, to the thermally conductive polyurethane adhesive composition for battery in electric vehicle comprising the polyol component, and to a method of manufacturing the thermally conductive polyurethane adhesive composition.

Electric vehicles are advantageous over combustion engine vehicles in terms of reduced CO₂ emissions, reduced pollution, and greener energy consumption, amongst other factors. Currently, the thermal management of the battery is limiting the energy density, and subsequently the driving range, of electric vehicles. Concerns about driving range are a key factor towards consumer hesitancy about electric vehicles.

Batteries are typically thermally managed, or cooled, by a cooling unit in electric vehicles. A thermal interface material (TIM) facilitates the efficient transport of heat between battery and cooling unit. TIMs take a wide variety of forms, with effective physical bridging of the battery and cooling unit surfaces and good thermal conductivity being key criteria independent of the nature of the TIM. TIMs can take the form of thermal greases, putties, pads, gap fillers and phase-change materials, each with own set of performance characteristics, advantages, and disadvantages.

Thermally Conductive Adhesives (TCAs) are TIMs with advantages over the afore-mentioned technologies in that they attempt to combine the mechanical strength of a structural adhesive, including ideally maintained despite fluctuating temperature, humidity and vibration levels, with the thermal performance of a TIM. Typical additional requirements of these materials in battery applications include excellent flame retardance and electrical isolation.

The dispensing and assembly process of the automobile or battery manufacturer often also requires a specific set of properties, such as good dispensability of the mixed components and an excellent thermal conductivity for the TCAs. The thermal conductivity is usually provided by the thermally conductive filler package contained in a high content in the adhesive. Due to the high content of thermal conductive fillers in these products to achieve a high thermal conductivity, the viscosity of the adhesive composition is very high, which results in a lower flow rate of the adhesive composition during application. Due to the fast cycle times in battery manufacturing processes, there is the strong need to mix and apply thermal products very fast. For that purpose, a thermally conductive adhesive composition having a low viscosity and a high flow is needed.

Therefore, there is a strong need to develop a polyol component for thermally conductive adhesive composition, which contains thermal conductive filler and still has low viscosity, and the thermally conductive adhesive composition comprising the polyol component.

These objects are achieved by the invention. One subject matter of the invention relates to a polyol component for thermally conductive adhesive composition comprising:
(1) at least one polymeric polyol having an average hydroxyl functionality from at least 1.8,
(2) at least one mono-functional nucleophilic agent, and
(3) at least one thermally conductive filler,
wherein the at least one mono-functional nucleophilic agent is present in an amount of larger than 0.1% by weight to less than 3.0% by weight based on the weight of the polyol component.

Another subject matter relates to a thermally conductive adhesive composition, comprising a polyol component according to the present invention and an isocyanate component comprising an isocyanate-terminated compound.

Yet another subject matter relates to a method for the manufacturing of a thermally conductive adhesive composition according to the present invention, comprising: (1) providing the polyol component and the isocyanate component; and (2) mixing the components to obtain the adhesive composition.

Yet another subject matter relates to a cured adhesive product obtained by curing a thermally conductive adhesive composition according to the present invention.

Yet another subject matter relates to an article comprising the thermally conductive adhesive composition according to the present invention or the cured adhesive product according to the present invention.

Unless specified otherwise, as used herein, the terms "a", "an" and "the" include both singular and plural referents.

The terms "comprising" and "comprises" as used herein are synonymous with "including", "includes" or "containing", "contains", and are inclusive or open-ended and do not exclude additional, non-recited members, elements or process steps.

The term "at least one" or "one or more" used herein to define a component refers to the type of the component, and not to the absolute number of molecules.

### Polymeric polyol

The polyol component comprises a polymeric polyol having an average hydroxyl functionality from at least 1.8, preferably from 1.8 to 6.0, more preferably from 1.8 to 4.0.

As used in this specification, the terms "polymer" and "polymeric" means prepolymers, oligomers, and both homopolymers and copolymers. As used in this specification, "prepolymer" means a polymer precursor capable of further reactions or polymerization by one or more reactive groups to form a higher molecular mass or cross-linked state. As used in this specification, the prefix "poly" refers to two or more. A polyol is understood to be a compound containing more than one hydroxyl (-OH) group in the molecule. A polyol can further have other functionalities on the molecule. The term "polyol" encompasses a single polyol or a mixture of two or more polyols. The average hydroxyl (-OH) functionality refers to the average number of reactive hydroxyl groups contained in one molecule of polyol.

The polymeric polyol may have a weight average molecular weight of from 400 to 10000 g/mol. "Molecular weight" herein refers to weight average molecular weight unless otherwise specified. The number average molecular weight Mn, as well as the weight average molecular weight Mw, is determined according to the present invention by gel permeation chromatography (GPC, also known as SEC) at 23°C using a styrene standard according to DIN EN ISO 16014-5:2012-10.

The polymeric polyol may also have a hydroxyl value from 10 to 500 mg KOH/g, preferably from 20 to 400 mg KOH/g, and more preferably from 50 to 350 mg KOH/g, measured according to DIN EN ISO 4629.

Some suitable polymeric polyols include the reaction products of low molecular weight polyhydric alcohols with alkylene oxides, so-called polyether polyols. The alkylene oxides preferably contain 2 to 4 carbon atoms. Some reaction products of this type include, for example, the reaction products of ethylene glycol, propylene glycol, the isomeric butane diols, hexane diols or 4,4'-dihydroxydiphenyl propane with ethylene oxide, propylene oxide or butylene oxide or mixtures of two or more thereof. The reaction products of polyhydric alcohols, such as glycerol, trimethylol ethane or trimethylol propane, pentaerythritol or sugar alcohols or mixtures of two or more thereof, with the alkylene oxides mentioned to form polyether polyols are also suitable. Thus, depending on the desired molecular weight, products of the addition of only a few mol ethylene oxide and/or propylene oxide per mol or of more than one hundred mol ethylene oxide and/or propylene oxide onto low molecular weight polyhydric alcohols may be used. Other polyether polyols are obtainable by condensation of, for example, glycerol or pentaerythritol with elimination of water. Some suitable polyols include those polyols obtainable by polymerization of tetrahydrofuran.

The polyether polyols are reacted in known manner by reacting the starting compound containing a reactive hydrogen atom with alkylene oxides, for example ethylene oxide, propylene oxide, butylene oxide, styrene oxide, tetrahydrofuran or epichlorohydrin or mixtures of two or more thereof.

Suitable starting compounds are, for example, water, ethylene glycol, 1,2- or 1,3-propylene glycol, 1,4- or 1,3-butylene glycol, hexane-1,6-diol, octane-1,8-diol, neopentyl glycol, 1,4-hydroxymethyl cyclohexane, 2-methyl propane-1,3-diol, glycerol, trimethylol propane, hexane-1,2,6-triol, butane-1,2,4-triol, trimethylol ethane, pentaerythritol, mannitol, sorbitol, methyl glycosides, sugars, phenol, isononylphenol, resorcinol, hydroquinone, 1,2,2- or 1,1,2-tris-(hydroxyphenyl)-ethane, ammonia, methyl amine, ethylenediamine, tetra- or hexamethylenediamine, triethanolamine, aniline, phenylenediamine, 2,4- and 2,6-diaminotoluene and polyphenylpolymethylene polyamines, which may be obtained by aniline/formaldehyde condensation, or mixtures of two or more thereof.

Some suitable polymeric polyols include diol EO/PO (ethylene oxide/propylene oxide) block copolymers, EO-tipped polypropylene glycols, or alkoxylated bisphenol A.

Some suitable polymeric polyols include polyether polyols modified by vinyl polymers. These polyols can be obtained, for example, by polymerizing styrene or acrylonitrile or mixtures thereof in the presence of polyether polyol.

Commercial examples of polyether polyol include Arcol series polyols such as Arcol PPG 425, Arcol PPG 2025 from Coverstro, Dianol series polyols such as Dianol 330 from Arkema and Pluracol series polyols such as P-2010 from BASF.

Some suitable polymeric polyols include polyester polyols. For example, it is possible to use polyester polyols obtained by reacting low molecular weight alcohols, more particularly ethylene glycol, diethylene glycol, neopentyl glycol, hexanediol, butanediol, propylene glycol, glycerol or trimethylol propane, with caprolactone. Other suitable polyhydric alcohols for the production of polyester polyols are 1,4-hydroxymethylcyclohexane, 2-methylpropane-1,3-diol, butane-1,2,4-triol, triethylene glycol, tetraethylene glycol, polyethylene glycol, dipropylene glycol, polypropylene glycol, dibutylene glycol and polybutylene glycol.

Some suitable polymeric polyols include polyester polyols obtained by polycondensation. Thus, dihydric and/or trihydric alcohols may be condensed with less than the equivalent quantity of dicarboxylic acids and/or tricarboxylic acids or reactive derivatives thereof to form polyester polyols. Suitable dicarboxylic acids are, for example, adipic acid or succinic acid and higher homologs thereof containing up to 16 carbon atoms, unsaturated dicarboxylic acids, such as maleic acid or fumaric acid, cyclohexane dicarboxylic acid (CHDA), and aromatic dicarboxylic acids, more particularly the isomeric phthalic acids, such as phthalic acid, isophthalic acid or terephthalic acid. Citric acid and trimellitic acid, for example, are also suitable tricarboxylic acids. The acids mentioned may be used individually or as mixtures of two or more thereof. Polyester polyols of at least one of the dicarboxylic acids mentioned and glycerol which have a residual content of OH groups are suitable. Suitable alcohols include but are not limited to propylene glycol, butane diol, pentane diol, hexanediol, ethylene glycol, diethylene glycol, triethylene glycol, dipropylene glycol, tripropylene glycol, cyclohexanedimethanol (CHDM), 2-methyl-1,3-propanediol (MPDiol), or neopentyl glycol or isomers or derivatives or mixtures of two or more thereof. High molecular weight polyester polyols may be used in the second synthesis stage and include, for example, the reaction products of polyhydric, preferably dihydric, alcohols (optionally together with small quantities of trihydric alcohols) and polybasic, preferably dibasic, carboxylic acids. Instead of free polycarboxylic acids, the corresponding polycarboxylic anhydrides or corresponding polycarboxylic acid esters with alcohols preferably containing 1 to 3 carbon atoms may also be used (where possible). The polycarboxylic acids may be aliphatic, cycloaliphatic, aromatic or heterocyclic or both. They may optionally be substituted, for example by alkyl groups, alkenyl groups, ether groups or halogens. Suitable polycarboxylic acids are, for example, succinic acid, adipic acid, suberic acid, azelaic acid, sebacic acid, phthalic acid, isophthalic acid, terephthalic acid, trimellitic acid, phthalic anhydride, tetrahydrophthalic anhydride, hexahydrophthalic anhydride, tetrachlorophthalic anhydride, endomethylene tetrahydrophthalic anhydride, glutaric anhydride, maleic acid, maleic anhydride, fumaric acid, dimer fatty acid or trimer fatty acid or mixtures of two or more thereof. Small quantities of monofunctional fatty acids may optionally be present in the reaction mixture.

The polyester polyol may optionally contain a small number of terminal carboxyl groups. Polyesters obtainable from lactones, for example based on ε-caprolactone (also known as "polycaprolactones"), or hydroxycarboxylic acids, for example ω-hydroxycaproic acid, may also be used.

Polyester polyols of oleochemical origin may also be used. Oleochemical polyester polyols may be obtained, for example, by complete ring opening of epoxidized triglycerides of a fatty mixture containing at least partly olefinically unsaturated fatty acids with one or more alcohols containing 1 to 12 carbon atoms and subsequent partial transesterification of the triglyceride derivatives to form alkyl ester polyols with 1 to 12 carbon atoms in the alkyl group.

Some suitable polymeric polyols include C36 dimer diols and derivatives thereof. Some suitable polymeric polyols include castor oil and derivatives thereof. Some suitable polymeric polyols include fatty polyols, for example the products of hydroxylation of unsaturated or polyunsaturated natural oils, the products of hydrogenations of unsaturated and polyunsaturated polyhydroxy natural oils, polyhydroxyl esters of alkyl hydroxyl fatty acids, polymerized natural oils, soybean polyols, and alkylhydroxylated amides of fatty acids. Some suitable polyols include the hydroxy functional polybutadienes (polybutadiene polyol, such as Krasol LBH 2000 from Cray Valley). Some suitable polymeric polyols include polyisobutylene polyols. Some suitable polymeric polyols include polyacetal polyols. Polyacetal polyols are understood to be compounds obtainable by reacting glycols, for example diethylene glycol or hexanediol or mixtures thereof, with formaldehyde. Polyacetal polyols may also be obtained by polymerizing cyclic acetals. Some suitable polymeric polyols include polycarbonate polyols. Polycarbonate polyols may be obtained, for example, by reacting diols, such as propylene glycol, butane-1,4-diol or hexane-1,6-diol, diethylene glycol, triethylene glycol or tetraethylene glycol or mixtures of two or more thereof, with diaryl carbonates, for example diphenyl carbonate, or phosgene. Some suitable polymeric polyols include polyamide polyols.

Some suitable polymeric polyols include polyacrylates containing OH groups. These polyacrylates may be obtained, for example, by polymerizing ethylenically unsaturated monomers bearing an OH group. Such monomers are obtainable, for example, by esterification of ethylenically unsaturated carboxylic acids and dihydric alcohols, the alcohol generally being present in a slight excess. Ethylenically unsaturated carboxylic acids suitable for this purpose are, for example, acrylic acid, methacrylic acid, crotonic acid or maleic acid. Corresponding OH-functional esters are, for example, 2-hydroxyethyl acrylate, 2-hydroxyethyl methacrylate, 2-hydroxypropyl acrylate, 2-hydroxypropyl methacrylate, 3-hydroxypropyl acrylate or 3-hydroxypropyl methacrylate or mixtures of two or more thereof.

Some suitable polymeric polyols include cardanol based polyols. Cardanol is a derivative of cashew nutshell liquid, which is extracted from the layer between the nut and shell of the cashew nut. This interlayer contains predominantly anacardic acid (2-carboxy-3-pentadecadienylphenol) and related acids having different double-bond contents, and also cardol (m-pentadecadienylresorcinol). The liquid is extracted from the interlayer by heating, in the course of which the acids are decarboxylated. The products thus obtained comprise cardanol, cardol and related compounds having different numbers of double bonds. Cardanol is finally isolated from CNSL by distillation. The side chains, which are saturated or cis-unsaturated, may undergo further reaction, by polymerization, to form higher molecular mass compounds.

Preferably, the cardanol based polyol is selected from cardanol based polyether polyols, cardanol based polyester polyols, cardanol based Mannich polyols, and combination thereof. Suitable cardanol based polyols include, but are not limited to, Polycard polyols available from Chemical Technical Services Inc. (e.g., Polycard XFN-50, Polycar XFN-53, and Polycard 425M), Cardolite Corp. (e.g., GX-9201, GX 9203, NX-9001, NX-9001LV, NX-9004, NX-9007, NX-9008, NX-5285, GX-9005, GX-9006, GX-9007, GX-9101, GX-9102, GX-9103, GX-9104), and BioBased Technologies (such as Agrol Platinum).

In one embodiment, the polymeric polyol is selected from a polyether polyol, a polyester polyol, a polybutadiene polyol and the combination thereof. In another embodiment, the polymeric polyol comprises at least one cardanol based polyol. In yet another embodiment, the polymeric polyol further comprises at least one polyester polyol other than cardanol based polyester polyol and/or at least polyether polyol other than cardanol based polyether polyol. In yet another embodiment, the polymeric polyol further comprises at least one polybutadiene polyol.

If present, the at least one polymeric polyol is present in the polyol component in an amount from 1 to 30 wt% (% by weight), preferably from 1 to 20 wt%, and more preferably from 1 to 10 wt% based on the total weight of the adhesive composition.

### Mono-functional nucleophilic agent

The polyol component further comprises at least one mono-functional nucleophilic agent in an amount of larger than 0.1% by weight to less than 3.0% by weight based on the weight of the polyol component. The mono-functional nucleophilic agent within the above content range functions in the polyol component as rheological additive which, when added at the desired application temperature, produces a significantly lower viscosity of the polyol component and a significantly better flow rate of the overall mixture of the thermally conductive adhesive composition.

The mono-functional nucleophilic agent is a compound having mono-functional nucleophilic groups such as hydroxy or amine groups, and is selected from mono-functional alcohols and/or mono-functional amines.

The mono-functional nucleophilic agent may be a mono-functional alcohol, preferably a mono-functional alkyl alcohol, preferably having 1 to 20 carbon atoms, more preferably having 4 to 18 carbon atoms, even more preferably having 6 to 18 carbon atoms, and in particular having 8 to 18 carbon atoms.

The mono-functional alcohol is selected from methanol, ethanol, propanol, isopropanol, butanol, 2-butanol, isobutanol, pentanols, hexanols, heptanols, octanols, nonanols, decanols, undecanols, dodecanols, tridecanols, tetradecanols, pentadecanols, hexadecanols, heptadecanols, octadecanols, nonadecanols, eicosanols, and combination thereof. Preferably, the mono-functional alcohol is selected from 1-octanol, 1-decanol, 1-dodecanol, 1-hexadecanol, 1-octadecanol, and mixture thereof.

Examples of mono-functional amine include ethylamine, diethylamine, triethylamine, propylamine, dipropylamine, tripropylamine, isopropylamine, diisopropylamine, butylamine, dibutylamine, tributylamine, isobutylamine, diisobutylamine, triisobutylamine, 1-methylpropyl-amine, methylethylamine, bis(1-methyl)propylamine, 1,1-dimethylethylamine, pentylamine, dipentylamine, tripentylamine, 2-pentylamine, 3-pentylamine, 2-methylbutylamine, 3-methylbutylamine, bis(3-methylbutylamine), tris(3-methylbutylamine), hexylamine, octylamine, di-N-octylamine, tri-N-octylamine, tert.-octylamine (1,1,3,3-tetramethylbutylamine), dodecylamine, 2-ethylhexylamine, decylamine, N-methylbutylamine, N-ethylbutylamine, N,N-dimethylethylamine, N,N-dimethylpropyl, N-ethyldiisopropylamine, allylamine, diallylamine, ethanolamine, diethanolamine, triethanolamine, methylethanolamine, methyldiethanol-amine, dimethylethanolamine, diethylethanolamine, N-butylethanolamine, N-butyldiethanolamine, dibutylethanolamine, cyclohexylethanolamine, cyclohexyldiethanolamine, N-ethylethanolamine, N-propylethanolamine, tert-butylethanolamine, tert-butyldiethanolamine, propanolamine, dipropanolamine, tripropanolamine or benzylamine.

Preferably, the polyol component comprises at least one mono-functional nucleophilic agent in an amount of 0.5% by weight to 2.5% by weight based on the weight of the polyol component.

### Thermally conductive filler

The polyol component also comprises at least one thermally conductive filler to provide the thermal conductivity to the cured adhesive for using in battery application.

The thermally conductive filler is selected from aluminum oxide, aluminum hydroxide, aluminum silicate, calcium silicate, magnesium silicate, calcium carbonate, barium sulfate, calcium sulfate, glass fibers, carbon black, silica and combination thereof. Preferably, the thermally conductive filler is selected from aluminum oxide, aluminum hydroxide, aluminum silicate, and combination thereof, and more preferably comprises aluminum hydroxide and/or aluminum oxide.

The thermally conductive fillers may have an average particle diameter D50 from 0.1 µm to 150 µm, preferably from 0.5 µm to 120 µm. The thermally conductive fillers can be used in single or in mixture of two or more materials having different particle sizes.

In the present invention, there are no particular restrictions on the shape of the filler. The shape may be a regular or irregular shape and includes but is not limited to polygon, cube, oval, sphere, needle, flake, plate or any combination thereof. Preferably, the fillers are in a spherical shape. The filler may be surface-modified or non-surface modified.

Examples of commercially available aluminium oxides include, for example, AX1 M from NIPPON STEEL Chemical & Material Co., Ltd.; NASR-05 from Bestry Performance Materials Co., Ltd.; DAW-01 from Denka Corporation. BAK 10 from Bestry Performance Materials Co., Ltd.; BA 7 from Bestry Performance Materials Co., Ltd.; BAK 5 from Bestry Performance Materials Co., Ltd.

Examples of commercially available aluminium hydroxides include, for example Martinal series products from Huber Advanced Materials.

Examples of commercially available aluminium silicates include, for example ASP 170 from BASF.

The thermally conductive filler is present in an amount from 60% to 95% by weight, preferably at least 70% to 95% by weight, more preferably at least 80% to 95% by weight, and in particular at least 85% to 95% by weight, based on the weight of the polyol component.

### Catalyst

The polyol component according to the present invention may contain one or more catalysts, selected from tertiary amine compounds, organometallic compounds, and mixture thereof. As catalysts, the usual organometallic compounds as known in polyurethane chemistry may be used, such as e.g. iron or in particular tin compounds. Examples of these are 1 ,3-dicarbonyl compounds of iron, such as iron(lll)-acetylacetonate, such as in particular the organotin compounds of di- and tetravalent tin, in particular the Sn(ll)-carboxylates or the dialkyl-Sn(IV)-dicarboxylates or the corresponding dialkoxylates, such as e.g. dibutyl tin dilaurate, dibutyl tin diacetate, dioctyl tin diacetate, dibutyl tin maleate, tin(ll)-octoate. In particular, tertiary amines or amidines may be used as catalysts, optionally in combination with the above-mentioned tin compounds. As amines, both acyclic and in particular cyclic compounds may be used here. Examples are tetramethylbutane diamine, bis(dimethylaminoethyl)ether, 1,4-diaza-bicyclooctane (DABCO), 1,8-diaza-bicyclo-(5.4.0)-undecene, 2,2'-dimorpholino diethyl ether, dimethyl piperazine or mixtures of the above-mentioned amines. A preferred embodiment of the adhesive composition according to the present invention comprises a tin compound, in particular dibutyl tin dilaurate as catalyst, such as those sold under the trade name of TIB Kat 218.

The catalyst is present in the polyol component in an amount of from 0.001 to 1 wt%, preferably in an amount of 0.01 to 0.5 wt%, based on the total weight of polyol component.

### Reaction retarder

The polyol component according to the present invention may contain one or more reaction retarders. As a reaction retarder in the context of this invention, substances are understood that slow the reaction between OH and NCO groups. For this purpose, thiols such as alkyl thiols and/or acidic compounds are suitable.

Examples of acidic compounds are organic or inorganic carboxylic acids, acid chlorides, acidic inorganic salts or other acidic organic compounds. Organic acids to be used as reaction retarders according to the invention are those which, for example, have a pKa range between 2.8 and 4.5, such as phthalic acid, isophthalic acid, terephthalic acid, ascorbic acid, benzoic acid, o-hydroxybenzoic acid, p-hydroxybenzoic acid, 2,3-dihydroxybenzoic acid, 2,4-dihydroxybenzoic acid, 3,4-dihydroxybenzoic acid, salicylic acid, adipic acid, succinic acid, malic acid, acetylsalicylic acid, alanine, β-alanine, 4-amino-butyric acid, glycine, lactic acid, sarcosine, serine. However, it is also possible to use formic acid, acetic acid, monochloric or dichloroacetic acid, 2,4- or 2,6-dichlorophenylacetic acid; Phosphoric acid, hydrogen phosphates; polymeric cation exchangers with carboxy groups or with orthophosphate groups; Lithium chloride, 4-toluenesulfonyl isocyanate or acid chlorides of the above-mentioned carboxylic acids are used. It can be used both individually and mixtures, the aforementioned acidic compounds.

Examples of thiols include, but are not limited to, isooctyl 3-mercaptopropionate, dodecyl 3-mercaptopropionate, trimethylolpropane tris(3-mercaptopropionate), pentaerithritol tetrakis(3-mercaptopropionate), dipentaerithritol hexakis(3-mercaptopropionate), tris[2-(3-mercaptopropionyloxy)ethyl]isocyanurate, tetraethylene glycol bis(3-mercaptopropionate), 1,10-decanedithiol, ethylene glycol bis(3-mercaptopropionate), 1,2-ethanedithiol, 1,3-propanedithiol, 1,4-butanedithiol, 1,6-hexanedithiol, 1,8-octanedithiol, 2-mercaptoethanol, monofunctional aliphatic linear and branched thiols with n=2 to 40 carbons, 1,8-dimercapto-3,6-dioxaoctane, n-dodecyl mercaptan, n-octyl mercaptan, pentaerythritol tetrakis(3-mercaptobutylate), 1,4-bis (3-mercaptobutylyloxy) butane, 1 ,3,5-tris(3-mercaptobutyloxethyl)-1 ,3,5-triazine-2,4,6(1H,3H,5H)-trione, tertiarydodecyl mercaptan, ethyl mercaptan, isopropyl mercaptan, dipentene dimercaptan, methyl mercaptan, n-propyl mercaptan, sec-butyl mercaptan, tert-nonyl mercaptan, tert-dodecyl mercaptan, tertiary mercaptan blends, tert-butyl mercaptan, grapefruit mercaptan, thioglycolic acid, thiolactic acid, 3-mercaptopropionic acid, ammonium thioglycolate, monoethanolamine thioglycolate, sodium thioglycolate, potassium thioglycolate, 2-ethylhexyl thioglycolate, isooctyl thioglycolate, isotridecyl thioglycolate, glyceryl thioglycolate, glyceryl dimercaptoacetate, pentaerythritol tetramercaptoacetate, butyl-3-mercaptopropionate, 2-ethylhexyl-3-mercaptopropionate, iso-tridecyl-3-mercaptopropionate, octadecyl 3-mercaptopropionate, ethoxylated trimethylolpropane tris(3-mercaptopropionate) with n=1 to 10,000 ethylene oxide repeat units, monoethanolamine thiolactate, thiodiglycolic acid, diammonium dithioglycolate, di(2-ethylhexyl) thiodiglycolate, methylene bis(butylthioglycolate), thiodipropionic acid, dithiobis(stearylpropionate), thioglycerol, dithioglycerol. It can be used both individually and mixtures, the aforementioned thiol compounds.

In one preferred embodiment, the reaction retarder is a monofunctional aliphatic linear and branched thiols, in particular n-dodecyl mercaptan.

The reaction retarder is present in the polyol component in an amount of from 0.001 to 2 wt%, preferably in an amount of 0.01 to 1 wt%, based on the total weight of polyol component.

### Chain extender

The polyol component according to the present invention may comprises a chain extender. Usually, chain extenders are low molecularweight molecules used to modify the backbone of a given polymer. The chain extender has a molecular weight Mₙ of 60 to 600 g/mol, and more preferably from 60 to 500 g/mol. In a preferred embodiment, the chain extender is a short chain diol, in particular a linear or branched, alkyl or cycloalkyl diol with 9 or less carbon atoms. In an especially preferred embodiment, the chain extender is selected from the group consisting of 1,2-propanediol, 1,3-propanediol, 2-methyl-1,3-propanediol, 1,2-butanediol, 1,3-butanediol, 1,4-butanediol, 1,5-pentanediol, 3-methyl-1,5-prentanediol, 1,6-hexanediol, 1,9-nonanediol, 1,12-dodecandiol, ethylene glycol, propylene glycol, neopentyl glycol, butylene glycol, cyclohexane-1,2-diol, cyclohexane-1,4-diol, 1,4-bis(hydroxymethyl)cyclohexane and mixtures thereof.

The chain extender is present in the polyol component in an amount less than 1 wt% based on the total weight of polyol component. In one embodiment, the polyol component essentially contains no chain extender, such as no more than 0.5 wt%, preferably no more than 0.1 wt%, more preferably no more than 0.05 wt%, and in particular contains no chain extender such as short chain diol, in view of further improving the viscosity of the polyol component and the flow rate of the adhesive composition.

### Additive

The composition according to the invention may further comprise additives. The additives are preferably selected such that they do not enter into a reaction or a side reaction with the isocyanates in another component of adhesive composition, at least not during the period of the cross-linking reaction. Preferably, the one or more additives are selected from the group consisting of plasticizer, additional filler, pigments, rheology modifiers, drying agents, flame retardants, water scavenger, antisettling agent and anti-foaming agents. In preferred embodiment the amount of the additives present in the adhesive composition is from 0 to 10 wt%, preferably 0.1 to 5 wt%, based on the total weight of the adhesive composition.

Conventional flame retardants can optionally be incorporated, preferably in an amount of not more than about 20 wt% of the polyol component, or not more than about 15 wt%, or not more than about 10 wt%. Optional flame retardants include tris(2-chloroethyl)phosphate, tris(2-chloropropyl)phosphate, tris(2,3-dibromopropyl)phosphate, tris(1,3-dichloropropyl)phosphate, tri(2-chloroisopropyl)phosphate, tricresyl phosphate, tri(2,2-dichloroisopropyl)phosphate, diethyl-N,N-bis(2-hydroxyethyl)aminomethylphosphonate, dimethylmethylphosphonate, tri(2,3-dibromopropyl)phosphate, tri(1,3-dichloropropyl)phosphate, and tetra-kis-(2-chloroethyl)ethylene diphosphate, triethylphosphate, diammonium phosphate, various halogenated aromatic compounds, antimony oxide, polyvinyl chloride, melamine, and the like.

### Properties of polyol component

The polyol component according to the present invention possesses a low viscosity although it contains a high amount of thermally conductive fillers. In one embodiment, the polyol component exhibits a rotational viscosity (Rmax) at 62°C of 80 Pa·s or less as measured with a plate-plate viscometer Physica MCR 301 with the plate system PP25 at a shear rate of 2.4 1/s and having plate distance of 0.5 mm after 180 seconds. In another embodiment, the polyol component exhibits a flow rate of 60 g or more when dispensed by a Cox Airflow 1 cartridge dispenser at 6 bar under 23°C for 30 seconds.

### Thermally conductive adhesive composition

The present invention also relates to a thermally conductive adhesive composition, comprising a polyol component according to the present invention and an isocyanate component comprising an isocyanate-terminated compound.

### Isocyanate-terminated compound

The isocyanate-terminated compound can be any compound having on average two, three or more isocyanate groups. As incorporated herein the term "isocyanate-terminated compound" encompasses diisocyanate, polymeric isocyanates, and isocyanate-terminated oligomers and polymers. It can be used both individually and mixtures, such isocyanate-terminated compounds. In one embodiment, the isocyanate-terminated compound is selected from the group consisting of an aromatic polyisocyanate, an alicyclic polyisocyanate, an aliphatic polyisocyanate, and mixture thereof, and preferably is one or more aliphatic polyisocyanates. The isocyanate-terminated compound preferably has an NCO content of 20 to 30%. The viscosity of the isocyanate-terminated compound is preferably no more than 5000 mPa.s.

Some advantageous isocyanate-terminated compounds have the general structure O=C=N-X-N=C=O where X is an aliphatic, alicyclic or aryl radical, preferably an aliphatic or alicyclic radical containing 4 to 18 carbon atoms.

Some suitable isocyanates include 1,5-naphthylene diisocyanate, diphenyl methane diisocyanate (MDI) including the 2,2'- 2,4'- and 4,4'- isomers, polymeric MDI (pMDI), hydrogenated MDI (HMDI), xylylene diisocyanate (XDI), tetramethyl xylylene diisocyanate (TMXDI), di- and tetraalkylene diphenylmethane diisocyanate, 4,4'-dibenzyl diisocyanate, 1,3-phenylene diisocyanate, 1,4-phenylene diisocyanate, the isomers of toluene diisocyanate (TDI), 1-methyl-2,4-diisocyanatocyclohexane, 1,6-diiso-cyanato-2,2,4-trimethyl hexane, 1,6-diisocyanato-2,4,4-trimethyl hexane, 1-isocyanatomethyl-3-isocyanato-1,5,5-trimethyl cyclohexane (IPDI), chlorinated and brominated diisocyanates, phosphorus-containing diisocyanates, 4,4'-diisocyanatophenyl perfluoroethane, tetramethoxybutane-1,4-diisocyanate, butane-1,4-diisocyanate, hexane-1,6-diisocyanate (HDI), dicyclohexylmethane diisocyanate, cyclo-hexane-1,4-diisocyanate, ethylene diisocyanate, phthalic acid-bis-isocyanatoethyl ester; diisocyanates containing reactive halogen atoms, such as 1-chloromethylphenyl-2,4-diisocyanate, 1-bromomethylphenyl-2,6-diisocyanate or 3,3-bis-chloromethylether4,4'-diphenyl diisocyanate. Aromatic polyisocyanates are preferred and diphenyl methane diisocyanate (MDI) and its isomers and polymeric MDI (pMDI) are more preferred as part or all of the polyisocyanates used for synthesis of the pre-polymers.

Some suitable isocyanates include isocyanate functional pre-polymers. Such pre-polymers are formed by reacting excess amount of polyisocyanate with a polyol, a polyamine, polythiol, or the combination of them. "Excess" is understood to mean that there are more equivalents of isocyanate functionality from the polyisocyanate compound than equivalents of hydroxyl functionality from the polyol present during reaction to form the pre-polymer. In this disclosure, it is to be understood that the terms polyisocyanate pre-polymer or pre-polymer or isocyanate functional pre-polymer are applied to any compound made according to the forgoing description, i.e., as long as the compound is made with at least a stoichiometric excess of isocyanate groups to isocyanate reactive groups it will be referred to herein as polyisocyanate pre-polymer or a pre-polymer or isocyanate functional pre-polymer.

Sulfur-containing polyisocyanates are obtained, for example, by reaction of 2 mole hexamethylene diisocyanate with 1 mole thiodiglycol or dihydroxydihexyl sulfide. Other suitable diisocyanates are, for example, trimethyl hexamethylene diisocyanate, 1,4-diisocyanatobutane, 1,12-diisocyanatododecane and dimer fatty acid diisocyanate. Suitable diisocyanates are the tetramethylene diisocyanate, hexamethylene diisocyanate, undecane diisocyanate, dodecamethylene diisocyanate, 2,2,4-trimethylhexane-2,3,3-trimethylhexamethylene diisocyanate, 1,3-cyclohexane diisocyanate, 1,4-cyclohexane diisocyanate, 1,3- and 1,4-tetramethyl xylene diisocyanate, isophorone, 4,4-dicyclohexylmethane, tetramethylxylylene (TMXDI) and lysine ester diisocyanate.

Aliphatic polyisocyanates with two or more isocyanate functionality formed by biuret linkage, uretdione linkage, allophanate linkage, and/or by trimerization are suitable.

Suitable at least trifunctional isocyanates are polyisocyanates formed by trimerization or oligomerization of diisocyanates or by reaction of diisocyanates with polyfunctional compounds containing hydroxyl or amino groups. Isocyanates suitable for the production of trimers are the diisocyanates mentioned above, the trimerization products of HDI, MDI, TDI or IPDI being preferred.

Blocked, reversibly capped polyisocyanates, such as 1,3,5-tris-[6-(1-methylpropylideneaminoxycarbonylamino)-hexyl]-2,4,6-trix-ohexahydro-1,3,5-triazine, are also suitable. The polymeric isocyanates formed, for example, as residue in the distillation of diisocyanates are also suitable for use. The isocyanate-terminated compound encompasses a single compound or the mixture of two or more compounds.

In one preferred embodiment, the isocyanate-terminated compound is selected from HDI, IPDI, the oligomer thereof, and the combination thereof, and in particular is the combination of HDI trimer and IPDI. The particularly selected isocyanate-terminated compound may contribute to an improved lap shear strength and tensile strength of the cured product.

The isocyanate-terminated compound is stored in a separate component (isocyanate component) before curing with polyols, and is present in the isocyanate component in an amount of from 5 to 30 wt%, preferably 15 to 20 wt%, based on the total weight of the isocyanate component. The isocyanate component may comprise the thermally conductive fillers same or similar as contained in the polyol component. In one embodiment, the isocyanate component comprises at least one thermally conductive filler in an amount of from 60% to 95% by weight, preferably at least 70% to 95% by weight, more preferably at least 80% to 95% by weight, and in particular at least 85% to 95% by weight, based on the weight of the polyol component

The ratio of the isocyanate groups contained in the isocyanate-terminated compounds relative to the OH groups contained in the polyols is as a rule in the range of equivalence and it is expedient if a slight excess of isocyanate groups in relation to the humidity is present at the surface. According to the invention, the NCO/OH ratio is between 0.90:1 and 1.5:1, in particular between 1.0:1 and 1.3:1. According to the invention, the polyol component and the isocyanate component may be mixed in a weight ratio from 1:10 to 10:1, preferably from 1:5 to 5:1, and more preferably from 1:2 to 2:1 depending on the choices of polyols and isocyanate-terminated compounds.

The thermal conductive adhesive composition according to the present application may be in the form of two-component or multi-component composition.

When the thermal conductive adhesive composition is a two-component adhesive composition, it consists of:
a polyol component comprising:
   (1) at least one polymeric based polyol having an average hydroxyl functionality from at least 1.8,
   (2) at least one mono-functional nucleophilic agent,
   (3) at least one thermally conductive filler, and
   (4) optionally at least one catalyst, and
an isocyanate component comprising:
   (1) at least one isocyanate-terminated compound,
   (2) at least one thermally conductive filler,
wherein the at least one mono-functional nucleophilic agent is present in an amount of larger than 0.1 % by weight to less than 3.0% by weight, preferably from 0.5% by weight to 2.5% by weight based on the weight of the polyol component.

When necessary, a portion of components such as filler or other additives can be kept in one or more parts other than the polyol and isocyanate components, which forms a multi-part thermal conductive adhesive composition.

A further object of the invention is cured adhesive product obtainable by curing the adhesive composition according to the invention. Curing of the inventive adhesive composition can be carried out by common methods well known to the person skilled in the art, such as low energy and room temperature curing, treatment with radiation, for example UV light, exposure to moisture, induction and/or heating.

In order to be processable in industrial application, the adhesive composition needs to have a viscosity that allows easy and precise application. Therefore, an embodiment is preferred wherein the adhesive composition according to the invention has a viscosity of no more than 10000 Pas, preferably no more than 1000 Pa·s, in particular 30 to 1000 Pa·s, measured by Anton Paar Rotational Rheometer with parallel plates (20 mm diameter) at a shear rate of 2.4 s⁻¹ at 20°C. In addition, the adhesive composition according to the invention has a density of 2 to 3 g/mL and preferably 2.2 to 2.8 g/mL.

The inventive adhesive composition is thermally conductive. In a preferred embodiment, the adhesive composition exhibits a thermal conductivity of at least 0.8 W/mK, preferably 1.0 to 3.2 W/mK, determined according to ISO 22007-2 at 25°C. It was surprisingly found that an advantageous balance between thermal conductivity and adhesiveness can be achieved if the thermal conductivity of the adhesive composition is chosen within the above ranges. Further, a thermal conductivity in the above range makes the adhesive composition especially suitable for use in the assemblies of energy storage devices, such as batteries.

Commonly, the thermal conductivity of an adhesive composition is achieved with the compromise of some other properties of the adhesive, such as flame retardancy, the adhesion and mechanical properties of the adhesive. It was surprisingly found that the inventive cured adhesive composition also achieves an excellent thermal stability at elevated temperatures. In one embodiment, the thermally conductive adhesive composition exhibits a variation of Shore A hardness at 25°C and 80°C [(Shore A hardness at 25°C - Shore A hardness at 80°C) / Shore A hardness at 25°C] of less than 5% after curing. In another embodiment, the thermally conductive adhesive composition exhibits a variation of Shore A hardness at 60°C and 110°C [(Shore A hardness at 60°C - Shore A hardness at 110°C) / Shore A hardness at 60°C] of less than 5% after curing.

The inventive adhesive composition is, in particular, suitable for use in the assembly of energy storage devices such as batteries. It is therefore important that the cured adhesive composition does not exhibit any significant electrical conductivity. In a preferred embodiment, the cured adhesive composition therefore possesses a high volume resistivity, preferably more than 10⁹Ωm, in particular more than 10¹⁰Ωm, determined according to DIN EN 62631-3-1.

In order to produce adhesive composition according to the invention, the polyol component and isocyanate component and other optional component are mixed optionally under heating, subsequently optionally solid components should be dissolved in the mixtures. Subsequently, the additives are mixed and dispersed. In this context, the humidity content should be kept low, for example water can be reduced by means of molecular sieves. Inert additives may also partially be admixed to the isocyanate-terminated compound. For application, the polyol parts and the isocyanate parts are mixed together in a manner known per se and the mixture is applied to the substrates to be bonded together.

A further object of the present invention is a method of manufacturing an article using the adhesive composition according to the invention. The method according to the invention comprises the following steps:
i) applying the adhesive composition according to the invention onto the surface of a first substrate to be bonded;
ii) bringing the surface of the first substrate to be bonded, treated with the adhesive composition, into contact with a second substrate to be bonded; and
iii) curing the adhesive composition to obtain the desired article.

In a preferred embodiment, contacting of the first substrate to be bonded with the second substrate to be bonded is carried out by applying pressure.

The method according to the invention is especially suitable for the manufacture of temperature-sensitive devices. In a preferred embodiment, the adhesive composition is therefore applied onto the surface of the first substrate at a temperature of 20 to 100°C, preferably 23 to 70°C.

A further object is an article obtainable according to method of manufacture according to the invention. Preferably, the article according to the invention comprises the cured adhesive composition according to the invention.

The adhesive composition according to the invention can be applied in a variety of technical fields and is especially suitable in the manufacture of heat-sensitive objects, in particular objects where heat is generated. Accordingly, a further object of the present invention is the use of the inventive adhesive composition in pipes, preferably cooling coils; in electronic components, preferably light-emitting devices, computer devices, mobile phones, tablets, touch screens, energy storage devices, automotive technology, hifi systems, and audio systems; in joints between heat pipes and water tanks in solar heated heating; in fuel cell and wind turbines; in the manufacture of computer chips; in light devices; batteries; in housings; in coolers; heat exchanging devices; wires; cables; heating wires; household appliances such as refrigerators and dishwashers; air conditionings; accumulators; transformers; lasers; functional clothing; car seats; medical devices; fire protection; electric motors; planes and trains.

The invention will be illustrated in more detail by way of the following examples which are not to be understood as limiting the concept of the invention.

### Examples

The following materials were used in the examples.

Cardanol based polyol (having an average hydroxyl functionality more than 1.8) was obtained under the trade name of Cardolite NX series from Cardolite.

Polybutadiene polyol (having an average hydroxyl functionality more than 1.8) was obtained under the trade name of Krasol LBH 2000 from Cray Valley.

Polypropylene glycol (having an average hydroxyl functionality more than 1.8) was obtained under the trade name of Arcol PPG-425 from Covestro.

Aromatic polyether diol (having an average hydroxyl functionality more than 1.8) was obtained under the trade name of Dianol 330 from Arkema.

1-Octanol was obtained from Sigma-Aldrich.

1-Decanol was obtained from Sigma-Aldrich.

1-Dodecanol was obtained from Sigma-Aldrich.

1-Hexadecanol was obtained from Sigma-Aldrich.

1-Octadecanol was obtained from Sigma-Aldrich.

1 ,6-Hexandiol was obtained from Sigma-Aldrich.

1 ,12-Dodecandiol was obtained from Sigma-Aldrich.

Catalyst is dibutyl tin dilaurate obtained from TIB chemicals under the trade name of TIB Kat 218.

Aluminum oxide filler is commercially available product having D50 particle sizes of about 0.5 to 75 µm.

Aluminum hydroxide filler is commercially available product having a D50 particle size of about 1 to 120 µm.

Reaction retarder is n-dodecyl mercaptan obtained from Sigma-Aldrich.

Polyisocyanate is a mixture of HDI trimer and IPDI, commercially available from Wanhua.

Additive is a mixture of flame retardant, water scavenger, antioxidant, stabilizer, pigment and adhesion promoter conventionally used in the art.

### Formulations of polyol components and test results

Polyol components of the thermally conductive adhesive compositions were formulated according to the ingredients and amounts in Table 1 by mixing well all components except the thermal conductive filler and flame retardant under vacuum with a Planetary mixer Labotop 2LA A64 G2 (from PC Laborsystem) until the mixture was dissolved completely, the vacuum was gassed with dry nitrogen, and the thermal conductive filler and flame retardant were added into the mixture and mixing well to obtain polyol components under vacuum.

**Table 1. Formulations of polyol components of the adhesive compositions (in gram)**

| | PC-1 | PC-2 | PC-3 | PC-4 | PC-5 | PC-6 | PC-7 | PC-8 | PC-9 | PC-10 |
|---|---|---|---|---|---|---|---|---|---|---|
| Cardanol based polyol | 6.25 | 6.25 | 6.25 | 6.25 | 6.25 | 6.25 | 6.25 | 6.25 | 6.25 | 6.25 |
| Polybutadiene polyol | 0.74 | 0.74 | 0.74 | 0.74 | 0.74 | 0.74 | 0.74 | 0.74 | 0.74 | 0.74 |
| Polypropylene glycol | 0.92 | 0.92 | 0.92 | 0.92 | 0.92 | 0.92 | 0.92 | 0.92 | 0.92 | 0.92 |
| Aromatic polyether diol | 0.78 | 0.78 | 0.78 | 0.78 | 0.78 | 0.78 | 0.78 | 0.78 | 0.78 | 0.78 |
| Catalyst | 0.09 | 0.09 | 0.09 | 0.09 | 0.09 | 0.09 | 0.09 | 0.09 | 0.09 | 0.09 |
| Reaction retarder | 0.2 | 0.2 | 0.2 | 0.2 | 0.2 | 0.2 | 0.2 | 0.2 | 0.2 | 0.2 |
| 1-octanol | 1.0 | - | - | - | - | - | - | - | - | - |
| 1-decanol | - | 1.0 | - | - | - | - | - | - | - | - |
| 1-dodecanol | - | - | 1.0 | 0.75 | 0.5 | - | - | - | - | - |
| 1-hexadecanol | - | - | - | - | - | 1.0 | - | - | - | - |
| 1-octadecanol | - | - | - | - | - | - | 1.0 | - | - | - |
| 1,6-hexandiol | - | - | - | - | - | - | - | - | 1.0 | - |
| 1,12-dodecandiol | - | - | - | - | - | - | - | - | - | 1.0 |
| Aluminum oxide filler | 45.7 | 45.7 | 45.7 | 45.7 | 45.7 | 45.7 | 45.7 | 45.7 | 45.7 | 45.7 |
| Aluminum hydroxide filler | 42.5 | 42.5 | 42.5 | 42.5 | 42.5 | 42.5 | 42.5 | 42.5 | 42.5 | 42.5 |
| Additives | Up to 100 | Up to 100 | Up to 100 | Up to 100 | Up to 100 | Up to 100 | Up to 100 | Up to 100 | Up to 100 | Up to 100 |

### Rotational viscosity

The rotational viscosity (Rmax) of the polyol components was measured by the plate-plate viscometer Physica MCR 301 with the plate system PP25 at a shear rate of 2.4 1/s and having a plate distance of 0.5 mm after 180 seconds. The test results are shown in Tables 2 and 3.

**Table 2. Rmax (25°C) of the polyol components**

| | PC-1 | PC-2 | PC-3 | PC-4 | PC-5 | PC-8 |
|---|---|---|---|---|---|---|
| Rmax @ 25°C (Pa s) | 186.3 | 201.8 | 220.9 | 239.9 | 256.8 | 283.9 |

**Table 3. Rmax (62°C) of the polyol components**

| | PC-1 | PC-2 | PC-3 | PC-6 | PC-7 | PC-8 | PC-9 | PC-10 |
|---|---|---|---|---|---|---|---|---|
| Rmax @ 62°C (Pa s) | 64.1 | 64.6 | 68.5 | 69.2 | 70.0 | 80.2 | 85.7 | 84.2 |

### Flow rate of polyol component

The Cox Airflow 1 cartridge dispenser system (manufactured by Medmix) was used for measuring the flow rate of the polyol components. The dispenser was set to maximum pressure and pressurized to 6 bar. The individual ingredients were applied using the MixPac MC 13-18 static mixer system (manufactured by Medmix). Before the measurement, a pre-run of 1.5 minutes was selected and the mixture of polyol component was then applied to a bowl placed on a precision balance for 30 seconds. After a triplicate determination, the mean value of the weights determined is given. The results are shown in Table 4.

**Table 4. Flow rate of the polyol components**

| | PC-1 | PC-2 | PC-3 | PC-4 | PC-5 | PC-8 | PC-9 | PC-10 |
|---|---|---|---|---|---|---|---|---|
| Flow rate (grams in 30 s) | 82.0 | 74.0 | 74.0 | 70.8 | 65.9 | 57.0 | 57.9 | 38.1 |

### Formulations of two-component adhesive compositions and test results

Polyol components of the thermally conductive adhesive compositions were formulated according to the ingredients and amounts in Table 5 by mixing well all components except the thermal conductive filler and flame retardant under vacuum with a Planetary mixer Labotop 2LA A64 G2 (from PC Laborsystem) until the mixture was dissolved completely. The vacuum was gassed with dry nitrogen, and the thermal conductive filler were added into the mixture and mixing well to obtain polyol components under vacuum.

Isocyanate components of the compositions contain the polyisocyanate and the fillers/additives are shown in Table 5. Isocyanate component was mixed well under vacuum by using a Planetary mixer Labotop 2LA A64 G2 (from PC Laborsystem).

Examples of two-component adhesive compositions containing 1-decanol are shown in Table 5. Examples of two-component adhesive compositions containing 1-dodecanol are shown in Table 6.

**Table 5. Formulations of two-component adhesive composition containing 1-decanol (in gram)**

| | AC-1 | AC-2 | AC-3 | AC-4 | AC-5 | AC-6 | AC-7 | AC-8 | AC-9 | AC-10 |
|---|---|---|---|---|---|---|---|---|---|---|
| Polyol component | | | | | | | | | | |
| Cardanol based polyol | 3.74 | 4.09 | 4.27 | 4.45 | 4.81 | 5.17 | 5.53 | 5.89 | 6.25 | 6.61 |
| Polybutadiene polyol | 0.44 | 0.48 | 0.50 | 0.52 | 0.57 | 0.61 | 0.65 | 0.69 | 0.74 | 0.78 |
| Polypropylene glycol | 0.55 | 0.60 | 0.63 | 0.66 | 0.71 | 0.76 | 0.81 | 0.87 | 0.92 | 0.97 |
| Aromatic polyether diol | 0.47 | 0.51 | 0.53 | 0.56 | 0.60 | 0.65 | 0.69 | 0.74 | 0.78 | 0.83 |
| Catalyst | 0.09 | 0.09 | 0.09 | 0.09 | 0.09 | 0.09 | 0.09 | 0.09 | 0.09 | 0.09 |
| Reaction retarder | 0.2 | 0.2 | 0.2 | 0.2 | 0.2 | 0.2 | 0.2 | 0.2 | 0.2 | 0.2 |
| 1-decanol | 4.5 | 4.0 | 3.75 | 3.5 | 3.0 | 2.5 | 2.0 | 1.5 | 1.0 | 0.5 |
| Aluminum oxide filler | 45.7 | 45.7 | 45.7 | 45.7 | 45.7 | 45.7 | 45.7 | 45.7 | 45.7 | 45.7 |
| Aluminum hydroxide filler | 42.5 | 42.5 | 42.5 | 42.5 | 42.5 | 42.5 | 42.5 | 42.5 | 42.5 | 42.5 |
| Additives | Up to 100 | Up to 100 | Up to 100 | Up to 100 | Up to 100 | Up to 100 | Up to 100 | Up to 100 | Up to 100 | Up to 100 |

| Isocyanate component | | | | | | | | | | |
|---|---|---|---|---|---|---|---|---|---|---|
| Polyisocyanate | 7.41 | 7.41 | 7.41 | 7.41 | 7.41 | 7.41 | 7.41 | 7.41 | 7.41 | 7.41 |
| Aluminum oxide filler | 86.7 | 86.7 | 86.7 | 86.7 | 86.7 | 86.7 | 86.7 | 86.7 | 86.7 | 86.7 |
| Aluminum hydroxide filler | 2.1 | 2.1 | 2.1 | 2.1 | 2.1 | 2.1 | 2.1 | 2.1 | 2.1 | 2.1 |
| Additives | Up to 100 | Up to 100 | Up to 100 | Up to 100 | Up to 100 | Up to 100 | Up to 100 | Up to 100 | Up to 100 | Up to 100 |

**Table 6. Formulations of two-component adhesive composition containing 1-dodecanol (in gram)**

| | AC-11 | AC-12 | AC-13 | AC-14 | AC-15 | AC-16 | AC-17 | AC-18 | AC-19 |
|---|---|---|---|---|---|---|---|---|---|
| Polyol component | | | | | | | | | |
| Cardanol based polyol | 3.74 | 4.09 | 4.45 | 4.81 | 5.17 | 5.53 | 5.89 | 6.25 | 6.61 |
| Polybutadiene polyol | 0.44 | 0.48 | 0.52 | 0.57 | 0.61 | 0.65 | 0.69 | 0.74 | 0.78 |
| Polypropylene glycol | 0.55 | 0.60 | 0.66 | 0.71 | 0.76 | 0.81 | 0.87 | 0.92 | 0.97 |
| Aromatic polyether diol | 0.47 | 0.51 | 0.56 | 0.60 | 0.65 | 0.69 | 0.74 | 0.78 | 0.83 |
| Catalyst | 0.09 | 0.09 | 0.09 | 0.09 | 0.09 | 0.09 | 0.09 | 0.09 | 0.09 |
| Reaction retarder | 0.2 | 0.2 | 0.2 | 0.2 | 0.2 | 0.2 | 0.2 | 0.2 | 0.2 |
| 1-dodecanol | 4.5 | 4.0 | 3.5 | 3.0 | 2.5 | 2.0 | 1.5 | 1.0 | 0.5 |
| Aluminum oxide filler | 45.7 | 45.7 | 45.7 | 45.7 | 45.7 | 45.7 | 45.7 | 45.7 | 45.7 |
| Aluminum hydroxide filler | 42.5 | 42.5 | 42.5 | 42.5 | 42.5 | 42.5 | 42.5 | 42.5 | 42.5 |
| Additives | Up to 100 | Up to 100 | Up to 100 | Up to 100 | Up to 100 | Up to 100 | Up to 100 | Up to 100 | Up to 100 |

| Isocyanate component | | | | | | | | | |
|---|---|---|---|---|---|---|---|---|---|
| Polyisocyanate | 7.41 | 7.41 | 7.41 | 7.41 | 7.41 | 7.41 | 7.41 | 7.41 | 7.41 |
| Aluminum oxide filler | 86.7 | 86.7 | 86.7 | 86.7 | 86.7 | 86.7 | 86.7 | 86.7 | 86.7 |
| Aluminum hydroxide filler | 2.1 | 2.1 | 2.1 | 2.1 | 2.1 | 2.1 | 2.1 | 2.1 | 2.1 |
| Additives | Up to 100 | Up to 100 | Up to 100 | Up to 100 | Up to 100 | Up to 100 | Up to 100 | Up to 100 | Up to 100 |

### Shore A hardness of the cured adhesives

The mixture of polyol component and isocyanate component in a weight ratio of 1:1 was applied using the Cox Airflow 1 compressed air dispenser system with the MixPac MC 13-18 mixer after a 1.5-minute pre-run into aluminum containers with a diameter of 4.5 cm and a height of 1.5 cm. The surface of container was smoothed, and the mixture was stored for 7 days at 23 °C and 50% relative humidity for complete hardening. The test specimens were then stored at the respective oven temperature for 2 hours.

Shore A hardness of the cured adhesive was measured immediately after removal of the test specimens from the oven. The Shore A hardness of the cured adhesive was measured according to ASTM D2240. Shore A hardness of the cured adhesives from AC-1 to AC-10 under room temperature and elevated temperature are shown in Table 7. Shore A hardness of the cured adhesives from AC-11 to AC-19 under elevated temperatures are shown in Table 8.

**Table 7. Shore A hardness of the cured adhesive by using 1-decanol**

| | AC-1 | AC-2 | AC-3 | AC-4 | AC-5 | AC-6 | AC-7 | AC-8 | AC-9 | AC-10 |
|---|---|---|---|---|---|---|---|---|---|---|
| Shore A hardness@ 25°C | 69.3 | 71.7 | 72.1 | 78.2 | 84.8 | 87.9 | 88 | 89.3 | 90 | 90.5 |
| Shore A hardness@ 80°C | 0 | 23.4 | 26.8 | 45.4 | 62.6 | 84.9 | 85.1 | 87.8 | 86.8 | 87.4 |
| Variation (%) | 100 | 67.3 | 62.8 | 41.9 | 26.2 | 3.4 | 3.3 | 2.8 | 3.6 | 3.4 |

**Table 8. Shore A hardness of the cured adhesive by using 1-decanol**

| | AC-11 | AC-12 | AC-13 | AC-14 | AC-15 | AC-16 | AC-17 | AC-18 | AC-19 |
|---|---|---|---|---|---|---|---|---|---|
| Shore A hardness@ 60°C | 68.1 | 74.2 | 81.1 | 82.6 | 84.2 | 85.7 | 86.9 | 88 | 90.1 |
| Shore A hardness@ 110°C | 46.1 | 63.5 | 76.1 | 77.5 | 82.9 | 85.4 | 85.4 | 86.5 | 90.4 |
| Variation (%) | 32.3 | 14.4 | 62.8 | 6.2 | 1.5 | 3.4 | 0.3 | 1.7 | 0.3 |

As can be seen from above tables, the polyol components having mono-functional alcohol as well as high content of fillers all achieved lower viscosity and higher flow rate compared to those having no mono-functional alcohol or having diol instead. In addition, after curing, the adhesive composition having overly high amount of mono-functional alcohol in polyol component softened at elevated temperatures after curing and therefore are not suitable for battery application during high requirement of thermal stability.

## Claims

1. A polyol component for thermally conductive adhesive composition comprising:
(1) at least one polymeric polyol having an average hydroxyl functionality from at least 1.8,
(2) at least one mono-functional nucleophilic agent, and
(3) at least one thermally conductive filler,
wherein the at least one mono-functional nucleophilic agent is present in an amount of larger than 0.1% by weight to less than 3.0% by weight based on the weight of the polyol component.

2. The polyol component according to claim 1, wherein the polymeric polyol is selected from polyether polyol, polyester polyol, polybutadiene polyol and combination thereof.

3. The polyol component according to claim 1 or 2, wherein the polymeric polyol is present in an amount from 1% to 20% by weight, preferably 1% to 15% by weight based on the weight of polyol component.

4. The polyol component according to any of claims 1 to 3, wherein the mono-functional nucleophilic agent is a mono-functional alcohol, and preferably is a mono-functional alkyl alcohol.

5. The polyol component according to any of claims 1 to 4, wherein the mono-functional nucleophilic agent has 1 to 20 carbon atoms, preferably 4 to 18 carbon atoms, more preferably 6 to 18 carbon atoms, and in particular 8 to 18 carbon atoms.

6. The polyol component according to any of claims 1 to 5, wherein the mono-functional nucleophilic agent is selected from methanol, ethanol, propanol, isopropanol, butanol, 2-butanol, isobutanol, pentanols, hexanols, heptanols, octanols, nonanols, decanols, undecanols, dodecanols, tridecanols, tetradecanols, pentadecanols, hexadecanols, heptadecanols, octadecanols, nonadecanols, eicosanols, and combination thereof.

7. The polyol component according to any of claims 1 to 6, wherein the mono-functional nucleophilic agent is present in an amount from 0.5% by weight to 2.5% by weight based on the weight of the polyol component.

8. The polyol component according to any of claims 1 to 7, wherein the thermally conductive filler comprises aluminum hydroxide and/or aluminum oxide.

9. The polyol component according to any of claims 1 to 7, wherein the thermally conductive filler is present in an amount from 60% to 95% by weight, preferably at least 70% to 95% by weight, more preferably at least 80% to 95% by weight, and in particular at least 85% to 95% by weight, based on the weight of the polyol component.

10. A thermally conductive adhesive composition, comprising a polyol component according to any of claims 1 to 9 and an isocyanate component comprising an isocyanate-terminated compound.

11. The thermally conductive adhesive composition according to claim 10, wherein the isocyanate-terminated compound is selected from aromatic polyisocyanates, alicyclic polyisocyanates, aliphatic polyisocyanates, and combination thereof.

12. The thermally conductive adhesive composition according to claim 10 or 11, which is a two-component adhesive composition consisting of:
a polyol component comprising:
(1) at least one polymeric polyol having an average hydroxyl functionality from at least 1.8,
(2) at least one mono-functional nucleophilic agent,
(3) at least one thermally conductive filler, and
(4) optionally at least one catalyst, and
an isocyanate component comprising:
(1) at least one isocyanate-terminated compound,
(2) at least one thermally conductive filler,
wherein the at least one mono-functional nucleophilic agent is present in an amount of larger than 0.1% by weight to less than 3.0% by weight based on the weight of the polyol component.

13. A method for the manufacturing of a thermally conductive adhesive composition according to claim 12, comprising:
(1) providing the polyol component and the isocyanate component; and
(2) mixing the components to obtain the adhesive composition.

14. A cured adhesive product obtained by curing a thermally conductive adhesive composition according to any of claims 10 to 12.

15. An article comprising the thermally conductive adhesive composition according to any of claims 10 to 12 or the cured adhesive product according to claim 14.
